Europäisches Patentamt

European Patent Office

Office européen des brevets

(19)

(11) Numéro de publication: **0 349 351**
**A2**

(12) **DEMANDE DE BREVET EUROPEEN**

(21) Numéro de dépôt: **89400073.6**

(22) Date de dépôt: **10.01.89**

(51) Int. Cl.5: **F 16 P 3/00**

(30) Priorité: **30.06.88 FR 8808815**

(43) Date de publication de la demande:
**03.01.90 Bulletin 90/01**

(84) Etats contractants désignés:
**AT BE CH DE ES GB IT LI LU NL SE**

(71) Demandeur: **Roy, Christian**
**125 Boulevard Saint Denis**
**F-92400 Courbevoie (FR)**

(72) Inventeur: **Roy, Christian**
**125 Boulevard Saint Denis**
**F-92400 Courbevoie (FR)**

(54) **Nouvelles presses de découpe à platine avec sécurité.**

(57) La présente invention concerne une presse de découpe à platine que l'on a construit de façon à fonctionner en toute sécurité et sur laquelle on a adapté une prise d'empreinte.

Suivant la figure 1, l'invention est caractérisée par une mâchoire composée de plateaux, l'un fixe (18) et l'autre ammené par un moteur (19). Les parties basses sont protégées par un soufflet, la commande du mouvement transmis par un embrayage frein pneumatique ou par un vérin électro-pneumatique est obtenue au moyen d'un pupitre électrique (17) mobile porté par une potence (14). La rotation de cette dernière entraine l'arrêt immédiat du mécanisme de mouvement de la mâchoire. La commande manuelle est obtenue en agissant sur deux boutons poussoirs simultanément. De plus, la presse à découper est adaptée aux relevés d'empreintes. Elle peut recevoir des rubans de dorure ou plastique afin d'orner les matières, ces rubans étant distribués par un programmateur.

L'invention est utilisée dans l'industrie d'imprimerie et de cartonnage.

Fig.1

EP 0 349 351 A2

## Description

### Nouvelles presses de découpe à platine avec sécurités.

L'invention, objet du présent dépôt, concerne une nouvelle presse de découpe à platine, équipée de sécurités garantissant son emploi sans risque pour l'utilisateur. Sur une presse à découper classique, fonctionnant à la manière d'une mâchoire fixe et une machire mobile, on a construit des éléments à soufflets de protection externes, une commande électrique de sécurité montée sur une potence mobile, elle même actionnant des relais de sécurité. La presse peut être transformée pour une prise d'empreinte et être équipée de réserve de rubans dont l'avancement est programmable que l'on presse à chaud, le cas échéant.

On connaissait jusqu'à présent des presses utilisées pour la découpe de toute matière (papier, carton, feuille pré-imprimée, matière plastique, liège, cuir, etc...) utilisées pour la fabrication des emballages, étiquettes, étuis, décors, etc... Elles sont généralement composées d'une mâchoire portant deux plaques d'acier qui se referment sous l'action d'un moteur électrique réglable entrainant un mécanisme à roues dentées. Lors de la fermeture des deux plaques d'acier, des poinçons découpent la matière selon un profil établit à l'avance. La transmission est mécanique, complétée ou non par un embrayage pneumatique pour les dispositifs récents. Les commandes électriques du moteur sont assurées par des interrupteurs et poussoirs placées sur le bati de la machine et les plaques de presse ou platines peuvent être chauffées pour réaliser des travaux de dorure ou de gaufrage.

Ces machines à découper présentent pour l'utilisateur de nombreux inconvénients et notamment :
- La face avant et son mécanisme mobile sont en contact permanent avec l'utilisateur. Cette disposition présente des risques d'accidents.
- La mise en fonctionnement et l'arrêt de la machine sont assurés par un interrupteur qui placé à proximité des parties mobiles présente un risque d'accès.
- Aucun élément facilement appréhendable ne permet le verrouillage de la machine pendant les interventions de calage ou de placement d'outillage quand l'opérateur se trouve entre les deux plateaux.
- Les risques de déclenchements intempestifs du moteur d'entrainement sont importants.
- Aucune possibilité de prendre des empreintes avec les machines existantes.

L'invention, objet de ce présent dépôt, permet d'obvier à ces inconvénients.

Cette nouvelle presse de découpe à platine avec sécurités est caractérisée par un ensemble de protections matérialisées, un double interrupteur poussoir monté sur potence, une potence mobile actionnant la sécurité (coupure générale, moteur principal et embrayage) et agissant sur la grille de protection (provoquant une $2^0$ sécurité), une visualisation à distance du fonctionnement, une clé de contact autorisant la marche de la machine en continue ou temporisée avec l'emploi d'un robot, une protection électrique temporisée contre les démarrages intempestifs, un contrôle de sécurité sur la pression air comprimé, une prise d'empreintes, un placement de contre parties, un distributeur de rubans programmable.

La présente invention ainsi définie présente de nombreux avantages et notamment :
- Aucune partie mobile n'est accessible par l'utilisateur.
- La commande électrique de mise en marche est assurée avec les deux mains ou deux doigts suivant le cas.
- La rotation légère de la potence portant les commandes électriques provoque l'arrêt de la presse et l'ouverture de la grille de sécurité agissant sur deux circuits de sécurité électrique.
- La déplacement de la potence avertit à distance du fonctionnement de la machine, ou sa mise en sécurité.
- Des relais temporisateurs éliminent les déclenchements intempestifs de la machine.
- La commande pneumatique contrôlée par un pressostat interdit les remises en marche incontrôlées de la presse.
- Une prise d'empreinte est adaptable sur les plateaux de la presse.
- Un système de tétonnage fixé sur les plateaux de la presse définit avec précision la découpe.
- Une réserve de rubans plastique ou à dorer alimente la presse. L'avancement du ruban est programmé en fonction de la fréquence de battement de la presse.

L'invention sera mieux comprise grâce aux dessins annexés qui ne sont présentés qu'à titre indicatif et non limitatif dans une réalisation préférentielle.

La figure 1 représente l'ensemble extérieur de la presse de découpe avec la potence.

La figure 2 représente le schéma électrique temporisateur de commande de cycle.

La figure 3 représente l'intégration du schéma 2 sur un circuit électrique existant.

Les figures 4, 5, et 6 représentent la position de la presse en fonctionnement ou prêt à partir.

Les figures 7, 8 et 9 représentent la position de la presse lorsque l'utilisateur intervient sur celle-ci.

Les figures 10 et 11 représentent les schémas de principe d'un dispositif de façonnage en relief de découpe ou demi-découpe.

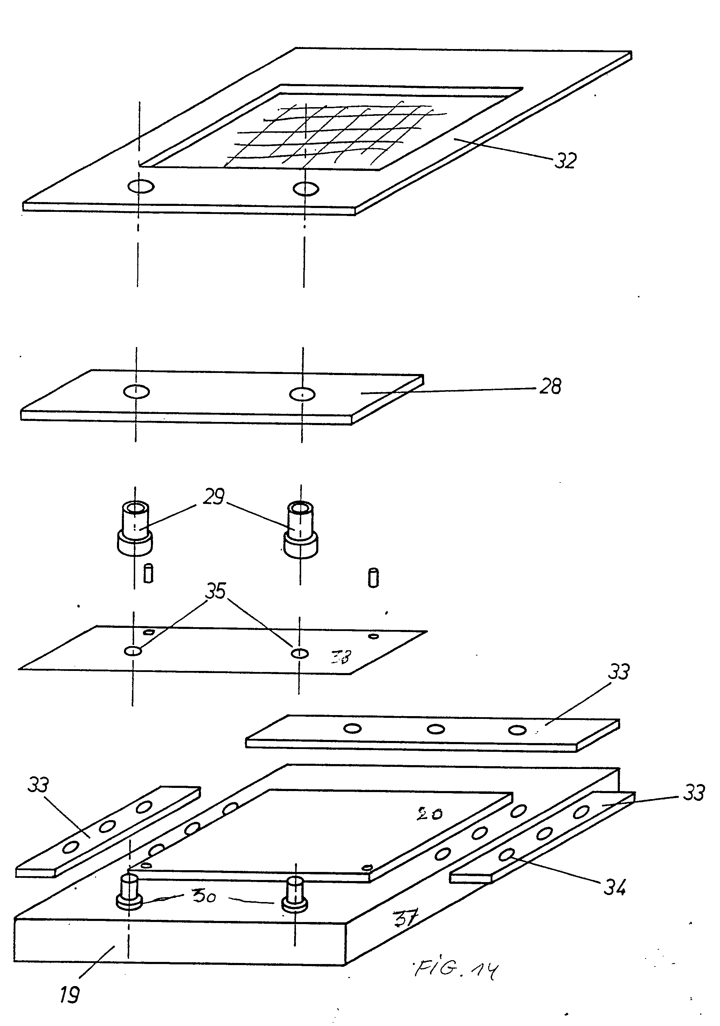

Les figures 12, 13, et 14 représentent l'adaptation sur la presse à découper de différents éléments de centrage pour prises d'empreintes selon différents procédés.

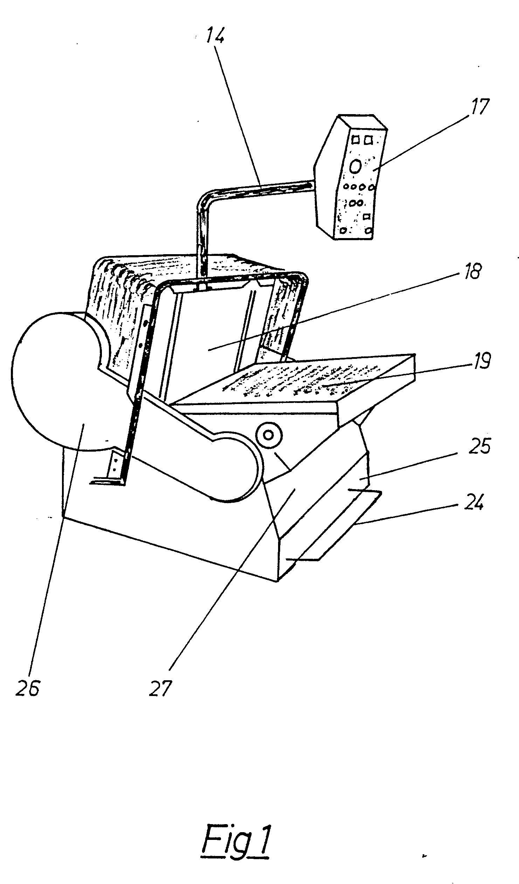

Suivant une caractéristique de l'invention, on a représenté sur la figure 1 la presse à découper vue de l'extérieur. Cette presse à découper est constituée de deux plateaux d'acier, l'un fixe (18) et l'autre mobile (19) qui se referment à la façon d'une mâchoire. La plateau (19) est soulevé par les bras (28) mus par un moteur. Le mécanisme de commande de cycle de la presse peut être actionné par la commande de deux poussoirs placés sur le pupitre (17) qui actionnent un circuit électro-pneumatique. Une grille de protection (16) mobile s'abaisse et interdit l'accès de tout intervenant lors du serrage des deux plateaux. Le boitier électrique (17), muni d'interrupteurs électriques, est monté sur une potence (14) dont la rotation à droite ou à gauche stoppe l'alimentation électrique et agit sur l'arrêt immédiat. Lorsque le plateau (19) s'élève le mécanisme mobile placé sous le plateau est isolé de l'extérieur par un soufflet (27) qui joue le rôle de protection vis à vis de l'opérateur.

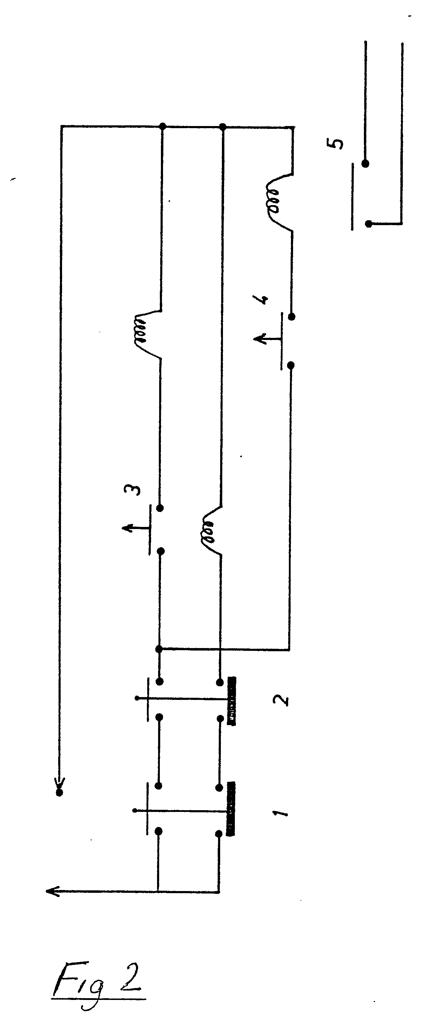

En se reportant à la figure 2, on trouve le schéma électrique du circuit de temporisation branché sur les deux boutons poussoirs de commande du boitier (17). Ces deux boutons poussoirs sont manoeuvrés par les deux mains ou les Oeux doigts de l'opérateur lorsque la potence est face à la presse. Sur la figure 2 les contacts des boutons poussoirs 1 et 2 sont fermés sur la bobine 3B (celle-ci est sous tension) et sont ouverts sur la bobine 4B (celle-ci est hors tension). Quand l'alimentation est interrompue par l'enfoncement des poussoirs 1 et 2, le contact 3 se colle pendant 500ms, pendant ce laps de temps, l'alimentation est établie sur la bobine 4B et au décollage du contact 3, le contact 4 se colle à son tour pour 500ms donnant cette fois-ci l'autorisation d'embrayage du cycle de la presse par l'intermédiaire du relais 5B et de son contact 5 qui se colle pour le même temps.

On remarquera que la presse ne pourra pas se mettre en mouvement par le relais 5B contact 5.

    1⁰ Si l'opérateur enfonce les poussoirs de moins de 500ms

    2⁰ Si l'opérateur provoque un décalage de pression sur les poussoirs 1 et 2 de plus de 500ms

    3⁰ Si un des deux boutons rste enclenché de façon occasionnelle ou permanente

    4⁰ Si un court circuit ou des micro coupures sont enregistrés sur le circuit

    5⁰ Si un relais reste collé ou décollé.

Il faut noter que les relais temporisés 3B-3 et 4B-4 sont embrochables, identiques et non réglables ce qui empêche et interdit toute erreur à l'occasion d'un dépannage ou d'une maintenance quelconque.

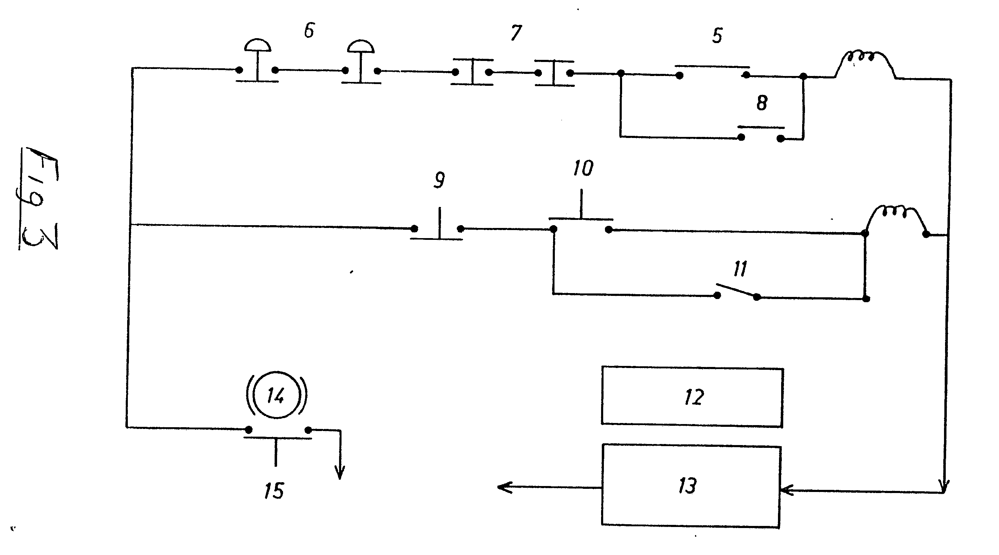

On a représenté sur la figure 3 le schéma classique à titre d'exemple, d'un circuit de commande qui peut s'appliqueur à tout autre matériel; Le contact 5 visible sur le plan 2 a remplacé le traditionnel bouton poussoir ou relais utilisé dans les déclenchements de cycle. Les contacts 6 constituent les arrêts d'urgence, ils sont branchés en série avec les contacts 7,ici représentant les contacts de notre grille de protection (16). Lorsque l'un de ces contacts s'ouvre l'alimentation est interrompue, les plateaux 18 et 19 s'immobilisent immédiatement par coupure de la bobine 8 B. Nous représentons le circuit 9-10-11-11B, commandant le moteur principal, 10 étant le contact "marche", 9 le contact "arrêt". La rotation de la potence (14) agit sur le le relais (15) dont elle commande l'ouverture. Si cette potence effectue une légère rotation par rapport à la presse le relais (15) interrompt l'alimentation électrique sur les deux circuits, moteur principal et embrayage frein.

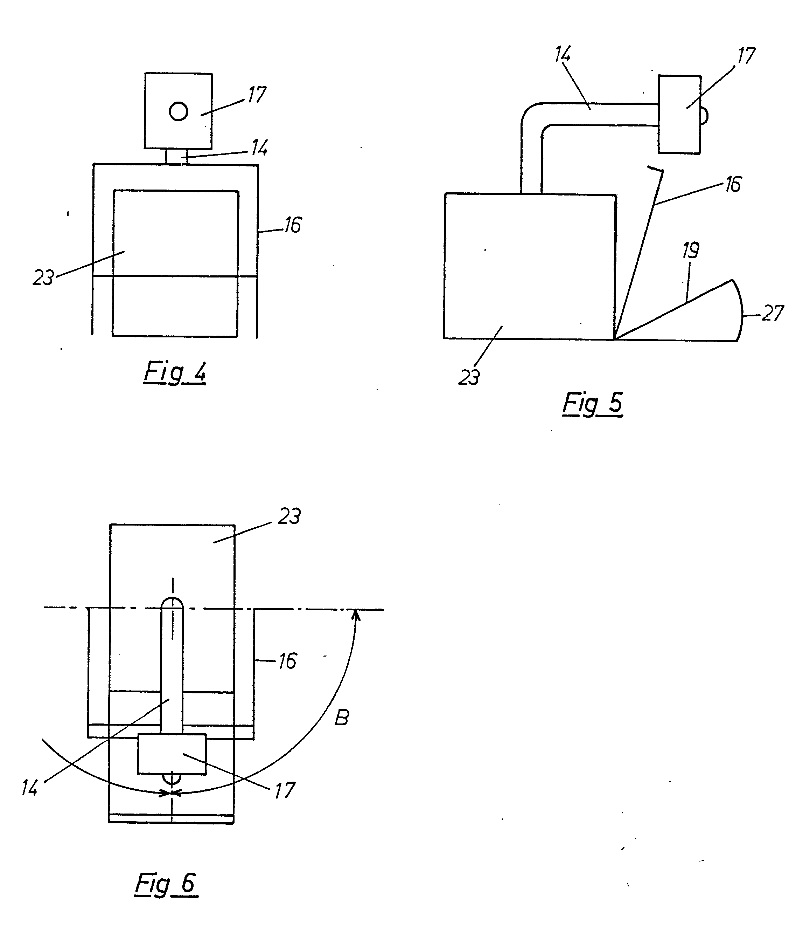

On a représenté sur les figures 4, 5, et 6 les positions du coffret de commande (17) électrique monté sur sa potence (14) lorsque la presse est en fonctionnement. Avant la mise en marche de la presse (23) le boitier de commande (17) monté sur sa potence (14) est face à l'opérateur (figure 4). La grille de protection (16) est inclinée et le plateau (19) portant le soufflet (27) est en position ouverte prêt à recevoir la matière à traiter (figure 5). La vue de dessus de la figure 6 représente la presse de découpe (23) portant la potence (14) terminée par le tableau électrique de commande (17). La grille (16) est en position inclinée.

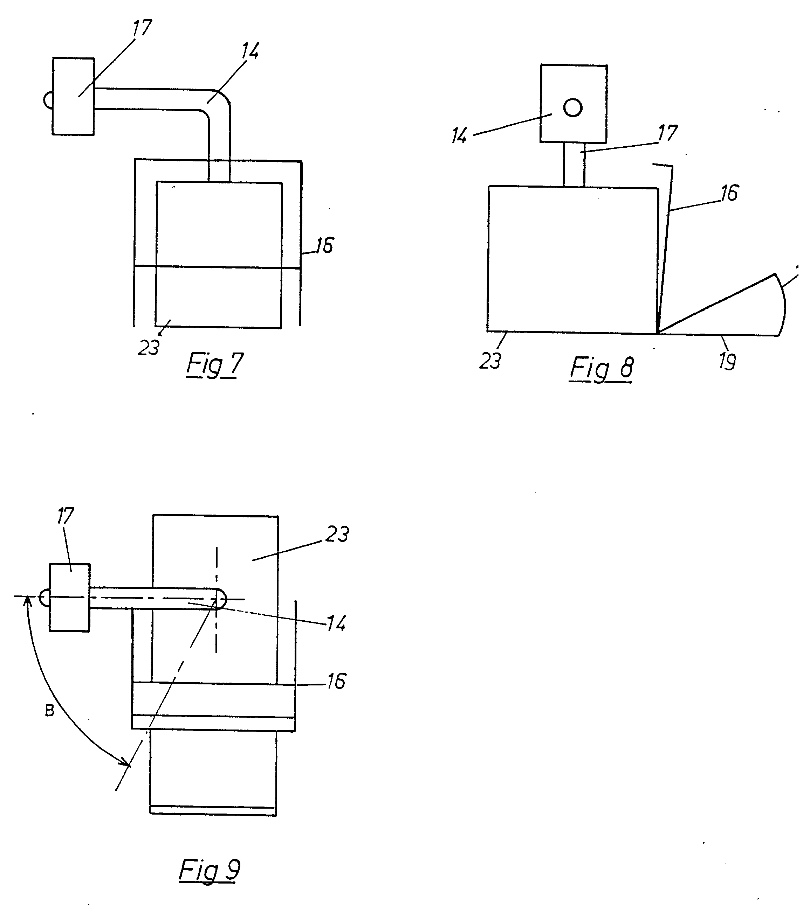

On a représenté sur les figures 7, 8, et 9 la presse de découpe lorsque l'opérateur veut faire une intervention sur la machine sans danger.

Selon la figure 7, représentant la face avant de la presse le boitier de commande (17) et sa potence (14) ont tourné de 90° par rapport à la presse (23). Cette rotation de la potence (14) ouvre le circuit par le contact (15) de l'alimentation électrique du moteur (voir figure 3). La grille (16) est en position haute introduisant une nouvelle sécurité de non fonctionnement. Le plateau (19) dont le mécanisme mobile est protégé par le soufflet (27) est en position basse (voir figure 8 représentant la presse à découper vue de profil). La figure 9 représente une vue de dessus de la presse. On voit le boitier de commande (17) porté par la potence (14) amené sur le côté de la presse et devenir inaccessible pour l'opérateur. Dans cette position l'alimentation électrique générale est interrompue.

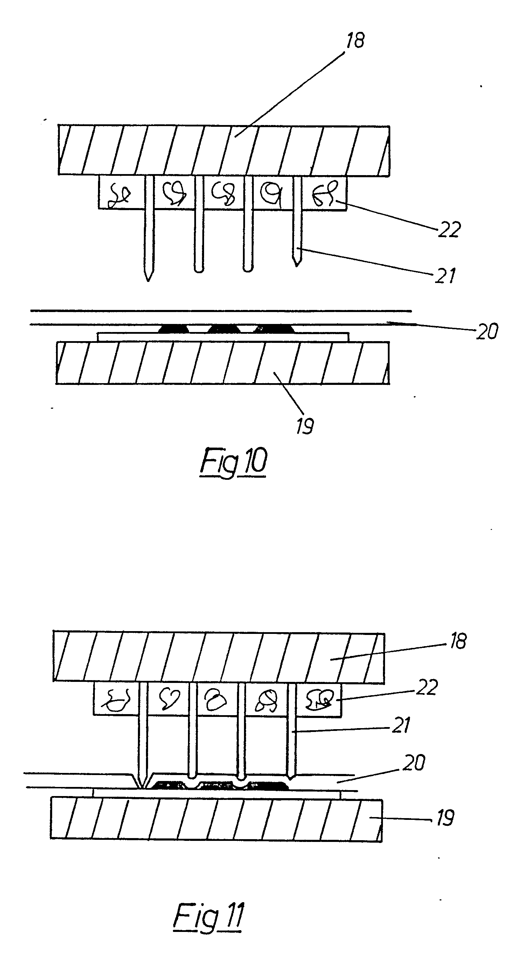

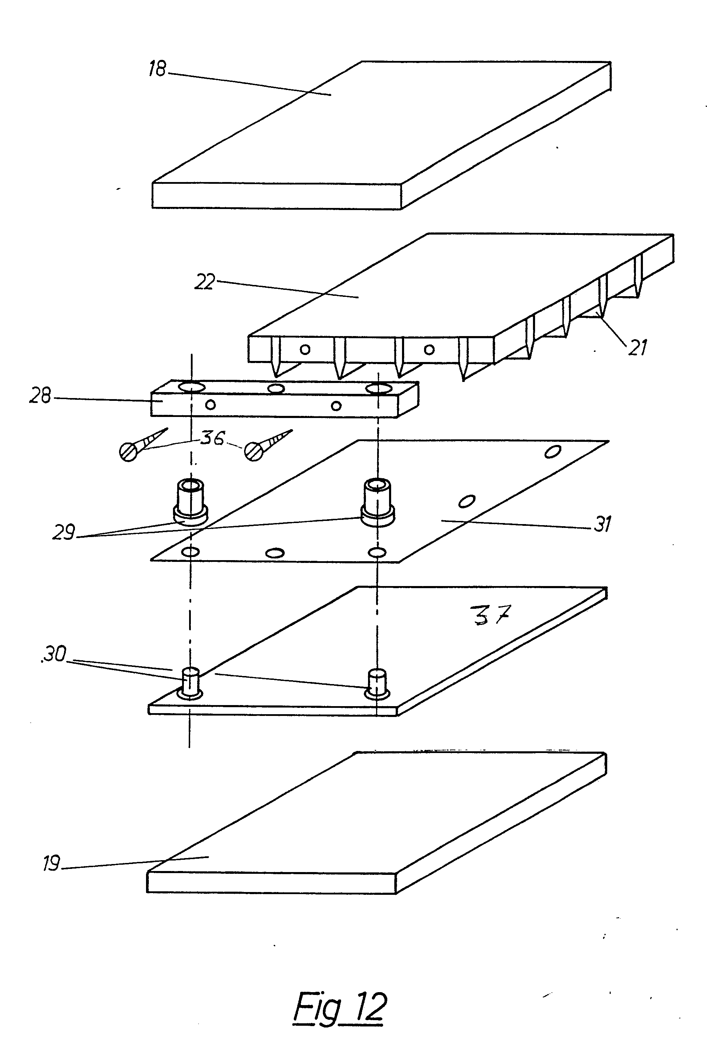

Selon une caractéristique importante de l'invention, on a représenté sur les figures 10 et 11 le schéma de principe de la prise d'empreinte. Ce dispositif est introduit entre les plateaux (18 et 19) de la presse à découper. Il est constitué d'un support de poinçons (22) fixés sur le plateau fixe (18) (ou platinefixe).

La garniture de poinçons (21) définie la forme de la découpe ou du gaufrage. Sur le plateau mobile (19) de la presse on a disposé le carton ou tout autre matière façonnable (20) placé sur un sommier souple. Lorsque les plateaux (18 et 19) se referment (selon la figure 11) la matière façonnable reçoit l'empreinte recherchée. Pour obtenir un bon résultat d'empreinte reproductible on utilise des points de repérage. Le montage de ces points est représenté sur la figure 12.

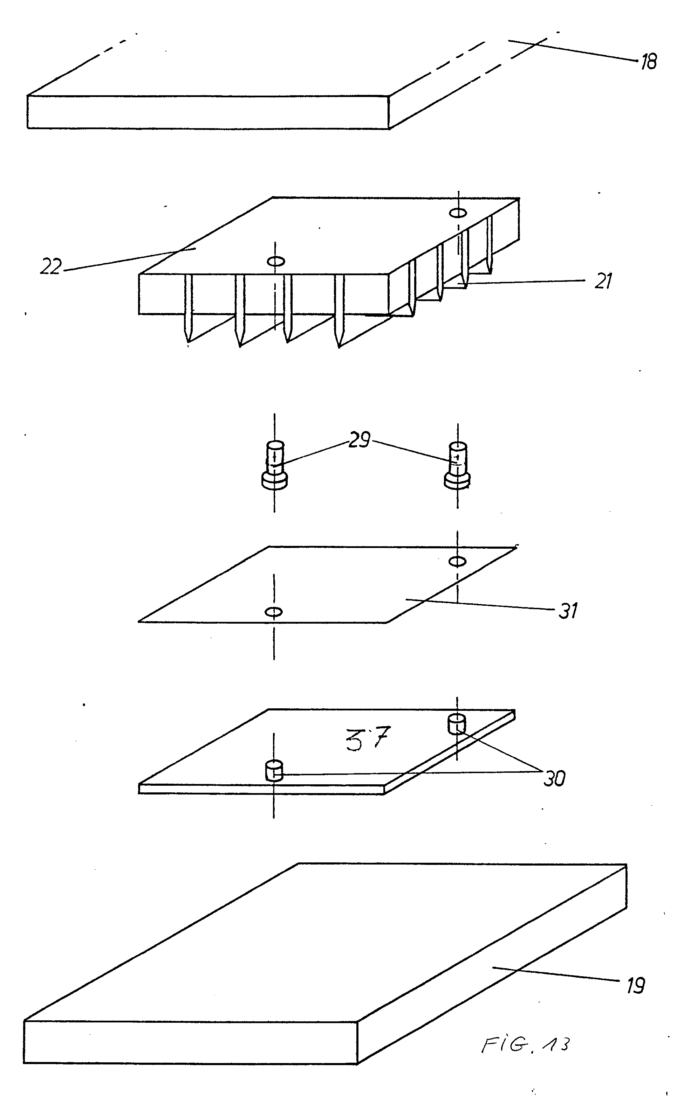

Sur cette figure 12 on a schématisé les plateaux (18 et 19) de la presse. Le porte poinçon (22) est garni de poinçons (21) selon un dessin pré-établi. La barre de placement (28) est placée sur un des 4 côtés de la forme de découpe (porte poinçon) 22 à l'aide de vis à bois et de pions de centrage. les 2 ou plusieurs canons de placements 29 sont placés dans les trous de la barre 28. Ceux-ci sont collés après fermeture des deux plateaux 18 et 19, pour placer les deux ou plusieurs tétons 30 sur le plateau 19. Par la suite nous plaçons la plaque 31 qui comporte des trous au même diamètre et même pas que la bare 28. Ainsi nous obtenons un parfait repérage entre l'outillage (poinçon) 21 et les empreintes que nous allons réaliser sur la plaque 31, et ces ensemble va pouvoir être transféré sur toutes les machines à découper de haute production dont le calage et le réglage va être très rapide.Une autre disposition de repérage peut être obtenue selon la figure 13. Cet te disposition n'utilise pas de barre de repérage. Entre les deux plateaux (18 et 19) on mesure les poinçons (21) et leurs supports (22). Les tétons (29 et 30) de fixation, reliant le sommier (37) au support (22), sont disposés en diagonale et traversent la matière (31) recevant l'empreinte. Le montage des éléments (22, 21, 31, et 30) est réalisé en dehors de la presse.

Dans une autre variante, on a représenté sur la figure (14)une prise d'empreinte plus complexe. La plateau fixe (18) porte un chassis (32). Ce chassis est doté du porte-poinçons (22) et des poinçons de prise d'empreintes. Pour régler ce chassis on utilise une barre (28) portant deux orifices dans lesquels on loge les tétons (29). Ces tétons traversent la plaque de transfert (38) au niveau des orifices (35) pour rejoindre la matière recevant l'empreinte (20) au niveau des tétons correspondant (30).

L'ensemble chassis, plaque de transfert, carton ou matériaux recevant l'empreinte repose sur le sommier (37) placé sur le plateau mobile de la presse (19). Pour centrer l'ensemble, on utilise des cales de plaques (33) vissées sur le support (37).

Le transfert de l'empreinte étant obtenu au moyen de la fermeture de la presse sur l'ensemble du dispositif.

fonctionnement ou l'arrêt de la machine peut être observé à distance au moyen de la potence mobile (16) portant la commande électrique (17), la position parallèle ou perpendiculaire à la machine signale le bon fonctionnement ou l'arrêt.

## Revendications

1 - Nouvelle presse de découpe avec sécurité caractérisé par un boitier de commande avec un double poussoir, un temporisateur, une potence mobile, un soufflet, une visualisation à distance du bon fonctionnement, une protection électrique, et mecanique

2 - Nouvelle presse de découpage selon la revendication 1 caractérisée en ce que les poussoirs de mise en marche (1 et 2) placés sur le boitier (17) sont manoeuvrés simultanément par les deux mains ou deux doigts de l'opérateur agissant ainsi sur un circuit temporisateur constitué des relais inviolables (3 et 4).

3 - Nouvelle presse à découper selon la revendication 1 caractérisée en ce que le circuit temporisateur actionne directement la commande du moteur au moyen d'un relais (5) placé sur le circuit électrique,remplaçant le poussoir de mise en route traditionnel.

4 - Nouvelle presse à découper selon la revendication 1 caractérisée en ce que le boitier de commande (17) est porté au moyen d'une potence (14) mobile, le déplacement de celle-ci de quelques degrés agit sur un relais(15) qui stoppe le fonctionnement de la presse.

5 - Nouvelle presse à découper selon la revendication 1 caractérisée en ce que les parties mobiles du plateau (19) sont isolées de l'opérateur par un soufflet (27) qui le protège.

6 - Nouvelle presse à découper selon la revendication 1 caractérisée en ce que le

14

17

18

19

25

24

26

27

*Fig 1*

Fig 2

Fig 3

_Fig 4_

_Fig 5_

_Fig 6_

*Fig 7*

*Fig 8*

*Fig 9*

_Fig 10_

_Fig 11_

18

22

21

28

36

29

31

30

37

19

_Fig 12_

FIG. 13

FIG. 14